# EUROPEAN PATENT SPECIFICATION

(11) **EP 4 163 159 B1**
(45) Date of publication and mention of the grant of the patent: **28.05.2025**
(21) Application number: 21821346.0
(22) Date of filing: 02.06.2021
(51) Int. Cl.: B60R 21/231, B60R 21/264, B60R 21/2338, B60R 21/237, B60R 21/00, B60R 21/235

(54) **FAR-SIDE AIRBAG DEVICE OF VEHICLE**
AIRBAGVORRICHTUNG FÜR EIN FAHRZEUG AUF DER FERNSEITE
DISPOSITIF DE COUSSIN DE SÉCURITÉ GONFLABLE DE FACE CACHÉE DE VÉHICULE

(30) Priority: 09.06.2020 KR 20200069886
(43) Date of publication of application: 12.04.2023
(73) Proprietor: Autoliv Development AB, 44783 Vargarda (SE)
(72) Inventor: JEONG, Ji Su, Hwaseong-si, Gyeonggi-do 18497 (KR); CHOI, Jin Wook, Hwaseong-si, Gyeonggi-do 18497 (KR)
(74) Representative: Feucker, Max Martin
(86) International application number: PCT/KR2021/006862
(87) International publication number: WO 2021/251676

(56) References cited:
- WO-A1-2019/193987
- WO-A1-2019/193987
- DE-A1- 102018 120 880
- GB-A- 2 318 767
- JP-A- 2007 083 835
- KR-A- 20090 065 957
- KR-A- 20190 021 905
- US-A1- 2007 278 771
- US-A1- 2015 246 656

## Description

### TECHNICAL FIELD

The disclosure relates to a far-side airbag device of a vehicle, and more particularly, to a far-side airbag device of a vehicle which protects an occupant by preventing collision between occupants upon side collision of the vehicle.

### BACKGROUND ART

In general, a vehicular airbag device is a safety device that protects a passenger by injecting gas into an airbag according to a signal of an impact detection sensor upon vehicle collision, and rapidly inflating the airbag.

Such an airbag device is installed in a steering wheel, a dashboard, a seat, a sidewall, etc. provided in a vehicle, and protects an occupant by being inflated toward a front side or a side of the occupant upon vehicle collision.

That is, a vehicle may be provided with a frontal airbag which is deployed in front of a driver seat and a passenger seat, a curtain airbag and a side airbag which are deployed from where side collision occurs (hereinafter, referred to as a 'collision side') to protect a passenger, and a knee airbag for protecting passenger's knee.

The side airbag may include a near side airbag which is inflated and deployed between a passenger and a vehicular configuration member like a door, and protects an occupant from the vehicular configuration member protruding inwards from an impact by side collision, and a far-side airbag or a center side airbag which restricts movement of an occupant moving to the inside of a vehicle due to reaction to side collision.

When a collision accident of the vehicle occurs, the far-side airbag may be deployed between the occupant and an occupant sitting next to the occupant, and may perform functions of preventing a mutual collision between the occupants, reducing an impact exerted to the occupant, and preventing the occupant from being catapulted out of the vehicle by the impact.

For example, the present applicant has filed applications for patent by disclosing a far-side airbag device configuration in patent document 1 and patent document 2 presented below.

In order to perform the above-described functions, the far-side airbag should stably support the occupant when coming into contact with the occupant, and should absorb the impact.

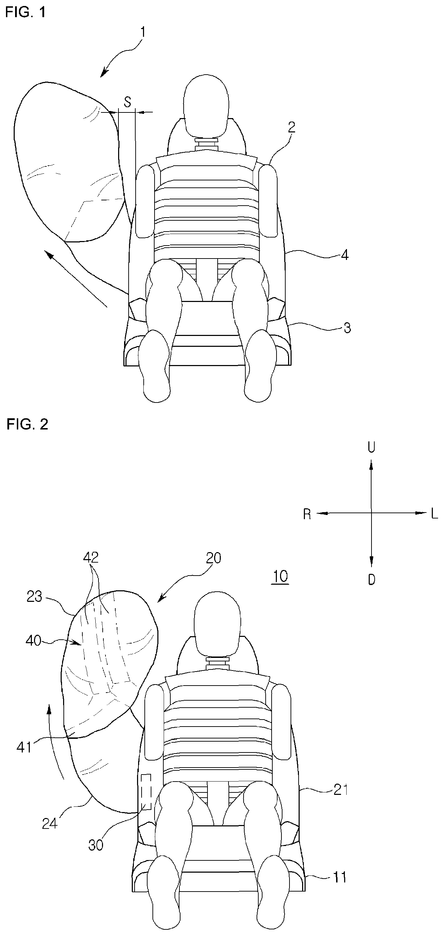

For example, FIG. 1 is a view illustrating a state in which a related-art far-side airbag is deployed.

As shown in FIG. 1, the related-art far-side airbag 1 is not supported by any structure that prevents the airbag 1 from being rotated or moved due to characteristics of a position where the airbag is installed.

To this end, the related-art far-side airbag 1 is inflated and deployed from a frame (not shown) installed in a backrest 4 of a seat 3 when being initially deployed, and accordingly, the far-side airbag 1 does not come into close contact with a side of an occupant 2 and is inflated and deployed toward the opposite occupant.

As described above, the occupant 2 and the airbag 1 are spaced apart from each other and a space (S) is formed, and accordingly, the related-art far-side airbag may have a limit to safely protecting the occupant 2 moving toward the side of the vehicle.

That is, the far-side airbag 1 should be inflated upward almost in a vertical direction to come into contact with the side of the occupant 2 in order to prevent a collision between the occupants 2, but the related-art far-side airbag 1 may be deployed toward the opposite occupant when being initially deployed, and accordingly, there may be a problem that an injury to the occupant caused by lateral movement of the occupant is not prevented. A far-side airbag device with the features of the preamble of claim 1 is known from WO 2019/193987 A1. A further far-side airbag device is known from DE 10 2018 120 880 A1.

(Patent Document 1) Korean Patent Registration No. 10-1916007(published on November 08, 2018)

(Patent Document 2) Korean Patent Registration No. 10-1781387(published on February 20, 2017)

### DISCLOSURE OF INVENTION

### TECHNICAL PROBLEM

An object of the disclosure is to solve the above-described problems, and is to provide a far-side airbag device of a vehicle which prevents a collision between occupants by being inflated and deployed between the occupants upon side collision of the vehicle.

Another object of the disclosure is to provide a far-side airbag device of a vehicle which prevents lateral movement of an occupant by being inflated and deployed upward in proximity of a side of the occupant.

### SOLUTION TO PROBLEM

In order to achieve the above-described objects, a far-side airbag device of a vehicle is defined by claim 1 and according to the disclosure includes: an airbag cushion which is embedded in a backrest of a seat and is inflated and deployed to correspond to a side of an upper body of an occupant upon side collision of the vehicle; an inflater configured to generate a gas by an impact detection signal and to supply the gas to the airbag cushion upon side collision of the vehicle; and a restriction member which is installed in the airbag cushion and configured to restrict a deployment shape of the airbag cushion, and the airbag cushion is inflated and deployed in an upward direction from a side of the occupant due to the restriction member to prevent a lateral movement of the occupant.

### ADVANTAGEOUS EFFECTS OF INVENTION

According to the far-side airbag device of the vehicle according to the disclosure as described above, there is an effect of safely protecting an occupant by controlling a deployment shape of the airbag cushion of the far-side airbag device to almost come into contact with the side of the occupant, and preventing a space from being formed between the occupant and the airbag cushion, and preventing lateral movement of the occupant.

That is, according to the disclosure, a first tether is installed on the center of an outside panel and an inside panel of the airbag cushion, so that there is an effect of controlling a deployment shape of the center of the airbag cushion, that is, a deployment thickness and a direction.

According to the disclosure, one end of a second tether connected with the outside panel is disposed further back than the other end of the second tether connected with the inside panel, so that there is an effect of controlling the deployment cushion of the airbag cushion to allow an upper chamber of the airbag cushion to be bent toward the front side of the occupant.

Accordingly, according to the disclosure, there is an effect of safely protecting occupant's head by controlling the deployment shape to allow the upper chamber of the airbag cushion to face the upper portion of occupant's upper body, particularly, the front of the head.

In addition, according to the disclosure, the outside panel of the airbag cushion is formed to have a larger cross-sectional area than the inside panel, and a folding portion is formed on the center of the outside panel to have parts overlapping each other, so that there is an effect of controlling the deployment shape of the upper chamber of the airbag cushion.

Accordingly, according to the disclosure, there is an effect of safely protecting the occupant by controlling the deployment shape of the airbag cushion to almost come into contact with the side of the occupant by the folding portion and the first tether, and preventing lateral movement of the occupant caused by a space between the occupant and the airbag cushion.

### BRIEF DESCRIPTION OF DRAWINGS

FIG. 1 is a view illustrating a state in which a related-art far-side airbag is deployed;
FIGS. 2 and 3 are a front view and a side view illustrating a state in which an airbag cushion in a far-side airbag device of a vehicle is deployed according to a first embodiment of the disclosure, respectively;
FIG. 4 is a deployment view illustrating a state in which a restriction member is installed on an inner surface of an outside panel;
FIG. 5 is a cross-sectional view taken on line A-A' of FIG. 4;
FIG. 6 is a cross-sectional view taken on line B-B' of FIG. 4;
FIGS. 7 and 8 are operation state views illustrating an operation state of the far-side airbag device of the vehicle according to the first embodiment of the disclosure;
FIGS. 9 and 10 are a front view and a side view illustrating a state in which an airbag cushion in a far-side airbag device of a vehicle is deployed according to a second embodiment of the disclosure, respectively;
FIG. 11 is a side view illustrating a state in which a restriction member is installed on an inner surface of an outside panel shown in FIG. 9;
FIG. 12 is a deployment view of an inside panel and an outside panel shown in FIG. 11; and
FIG. 13 is a cross-sectional view taken on line A-A' of FIG. 11.

### BEST MODE FOR CARRYING OUT THE INVENTION

Hereinafter, a far-side airbag device of a vehicle according to a preferred embodiment of the disclosure will be described in detail with reference to the accompanying drawings.

Hereinafter, a configuration of a far-side airbag device for preventing a collision between occupants sitting on a driver seat and a passenger seat will be described, but the disclosure is not necessarily limited thereto and it should be noted that the disclosure may be changed to be applicable to a 2nd row or 3rd row according to a configuration of a vehicle.

Hereinafter, a direction toward a front side of a vehicle from a driver seat is referred to as a 'forward direction (F),' and a direction toward a rear side of the vehicle is referred to a 'backward direction (B).' Along with these terms, terms indicating directions such as 'left side (L),' 'right side (R),' 'upward direction (U),' and 'downward direction (D)' are defined to indicate respective directions with reference to the forward direction and the backward direction described above.

Along with these terms, a direction toward an occupant from an airbag cushion with reference to the occupant is referred to as 'inside,' and the opposite direction thereof is referred to as 'outside.'

Accordingly, the forward, backward (F, B) directions, the left, right (L, R) directions, and the inside (I) and outside (O) directions of the vehicle may be expressed as a horizontal direction, respectively, and the upward, downward (U, D) directions of the vehicle may be expressed as a vertical direction.

### [First Embodiment]

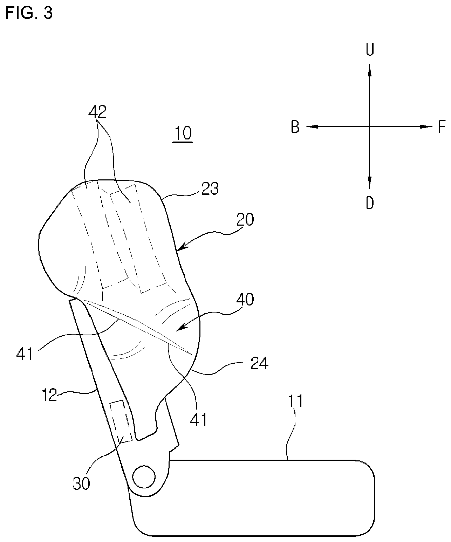

FIGS. 2 and 3 are a front view and a side view illustrating a state in which an airbag cushion in a far-side airbag device of a vehicle is deployed according to a first embodiment of the disclosure, respectively.

As shown in FIGS. 2 and 3, the far-side airbag device of the vehicle according to the first embodiment of the disclosure includes an airbag cushion 20 which is embedded in a backrest 12 of a seat 11 and is inflated and deployed to correspond to a side of occupant's upper body upon side collision of the vehicle, an inflater 30 which generates a gas according to an impact detection signal upon side collision of the vehicle and supplies the gas to the airbag cushion 20, and a restriction member 40 which is installed in the airbag cushion 20 to restrict a deployment shape so as to inflate and deploy the airbag cushion 20 in the upward direction almost in contact with a side of the occupant.

The airbag cushion 20 is inflated and deployed from the backrest 12 of the seat 11 in the forward, upward, and downward directions, and is inflated and deployed to correspond to the side of the pelvis and the whole upper body of the occupant, that is, the belly, chest, neck, and head of the occupant. As described above, the airbag cushion 20 is inflated and deployed between the occupant and another occupant (hereinafter, referred to as the 'opposite occupant') and performs a function of safely protecting the occupants from a collision between the occupants due to impact by a side collision.

To achieve this, the airbag cushion 20 includes an inside panel 21 which comes into contact with a right side surface of the occupant, that is, a driver, and an outside panel 22 which comes into contact with a left side surface of the opposite occupant, and may be formed in a bag-like shape by bonding edges of the inside panel 21 and the outside panel 22 by sewing.

The airbag cushion 20 may be formed to be inflated and deployed in a substantially circular, oval, or hexahedral shape, and may be inflated and deployed from the right side of the occupant in the forward, upward, and downward directions.

In the present embodiment, the airbag cushion 20 may be inflated and deployed in a substantially semi-circular shape to be convex in the forward direction, as shown in FIG. 3.

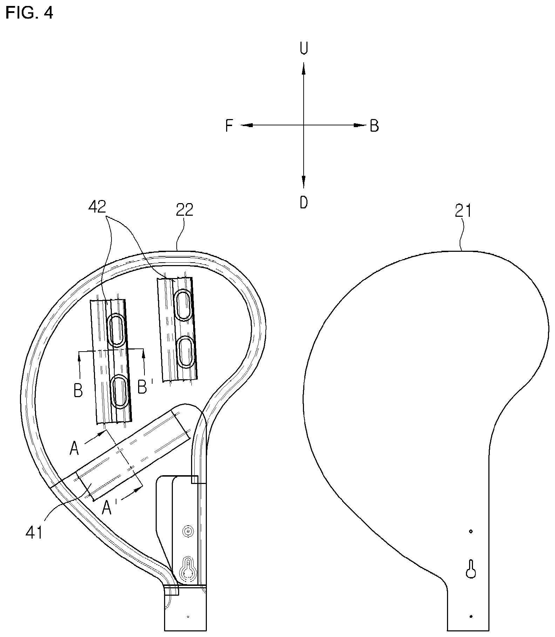

Configurations of the airbag cushion and the restriction member will be described in detail with reference to FIGS. 4 to 6.

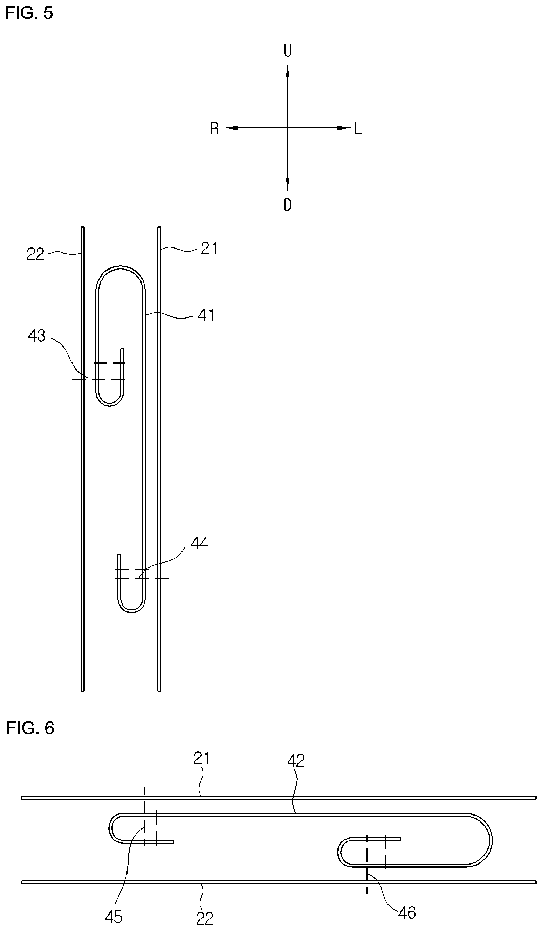

FIG. 4 is a deployment view illustrating a state in which the restriction member is installed on an inner surface of the outside panel, FIG. 5 is a cross-sectional view taken on line A-A' of FIG. 4, and FIG. 6 is a cross-sectional view taken on line B-B' of FIG. 4. FIG. 4 illustrates a state in which the inside panel is disassembled from the outside panel.

As shown in FIG. 4, the inside panel 21 and the outside panel 22 may be formed in a semi-circular shape, respectively, and an upper end of each panel 21, 22 may protrude in the backward direction so as to protect the head of the occupant, and a lower end of each panel 21, 22 may be provided with an introduction portion which is connected with the inflater 30 to introduce a gas.

The airbag cushion 20 is divided into an upper chamber 23 to protect the upper portion of the chest, the neck, and the head with reference to the chest of the occupant, and a lower chamber 24 to protect the lower portion of the chest, the belly, and the pelvis of the occupant.

The inflater 30 may be embedded in the backrest 12 of the seat 11, and may ignite an inner firer according to a detection signal of an impact detection sensor (not shown) installed in the vehicle when a side collision of the vehicle occurs, and may generate a gas and supply the gas into the airbag cushion 20 through the introduction portion.

The restriction member 40 performs a function of controlling a deployment shape of the airbag cushion 20 to allow the airbag cushion 20 to come into contact with a side of the occupant during a deployment process of the airbag cushion 20.

As shown in FIG. 4, the restriction member 40 includes a first tether 41 which is installed between a front end and a rear end of a center of the airbag cushion 20 to restrict a deployment shape of the center of the airbag cushion 20.

Along with this, the restriction member 40 may further include a second tether 42 which is installed in the upper chamber 23 of the airbag cushion 20 along the vertical direction to restrict a deployment shape of the upper chamber 23.

The first and second tethers 41, 42 may be formed in a band shape having a pre-set width, respectively.

The first tether 41 is installed to be slightly inclined toward an upper portion of a rear side.

For example, one end of the first tether 41, a left end when viewed on FIG. 5, is connected to the outside panel 22, and the other end of the second tether 42, a right end when viewed on FIG. 5, is connected to the inside panel 21.

Herein, the left end of the first tether 41 is disposed on a higher position than the right end.

That is, a first sewing line 43 connecting the left end of the first tether 41 and the outside panel 22 is disposed on a higher position than a second sewing line 44 connecting the right end of the first tether 41 and the inside panel 21.

As described above, the disclosure may have the first tether installed on the center of the outside panel and the inside panel to control the deployment shape of the center of the airbag cushion, that is, a deployment thickness and a direction.

That is, the deployment thickness of the center of the airbag cushion 20 may be restricted to a thickness corresponding to a distance between the first sewing line 43 and the second sewing line 44 that is narrower than a width of the first tether 41.

In addition, according to the disclosure, one end of the first tether connected with the outside panel is disposed higher than the other end of the first tether connected with the inside panel, such that the deployment shape of the airbag cushion is controlled to allow the center of the airbag cushion, which is inflated and deployed toward the opposite occupant when being initially deployed, to bend toward the occupant.

Accordingly, the disclosure may safely protect the occupant by inflating and deploying the airbag cushion in the upward direction almost in contact with the side of the occupant.

That is, the disclosure may prevent an injury to the occupant in advance by preventing a space from being formed between the airbag cushion and the occupant.

Referring back to FIG. 4, the second tether 42 may perform a function of restricting the deployment shape of the upper chamber 23 in the airbag cushion 20.

The second tether 42 may be installed in the upper chamber 23 of the airbag cushion 20 along the vertical direction. One pair of second tethers 42 may be installed in parallel to be spaced apart from each other by a pre-set distance. Of course, the disclosure is not necessarily limited thereto, and may be changed to provide one or three or more second tethers 41 according to various conditions such as a shape, a size, etc. of the airbag cushion 20.

One end of each second tether 42, a right end when viewed on FIG. 6, may be connected to the outside panel 22, and the other end of the second tether 42, a left end when viewed on FIG. 6, may be connected to the inside panel 21.

Herein, a third sewing line 45 connecting the right end of the second tether 42 and the outside panel 22 may be disposed on the left side, compared to a fourth sewing line 46 connecting the left end of the second tether 42 and the inside panel 21, that is, on a rear side when viewed in the vehicle.

As described above, the disclosure may have one or more second tethers installed in the upper chamber of the airbag cushion along the vertical direction to control the deployment shape of the upper chamber, that is, a deployment thickness and a direction.

That is, the deployment thickness of the upper chamber 23 of the airbag cushion 20 may be restricted to a thickness corresponding to a distance between the third sewing line 45 and the fourth sewing line 46 that is narrower than a width of the second tether 42.

In particular, according to the disclosure, one end of the second tether connected with the outside panel may be positioned further back than the other end of the second tether connected with the inside panel, such that the deployment shape of the airbag cushion is controlled to allow the upper chamber of the airbag cushion to bend toward the front of the occupant.

Accordingly, the disclosure may safely protect occupant's head by controlling the deployment shape to allow the upper chamber of the airbag cushion to face the upper portion of the upper body of the occupant, particularly, the front of the head.

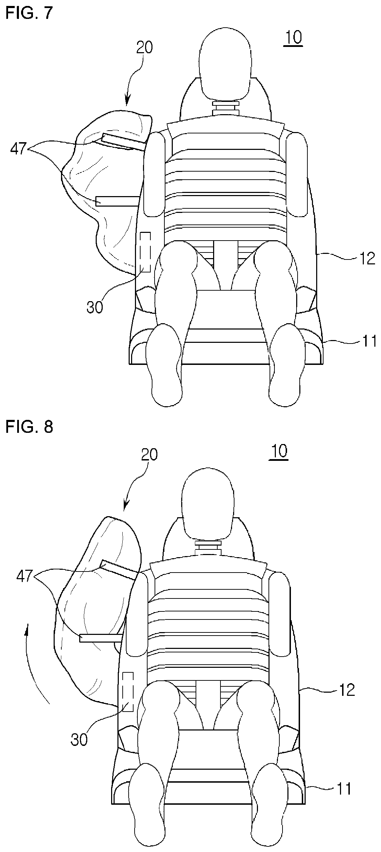

Next, an operating method of the far-side airbag device of the vehicle according to the first embodiment of the disclosure will be described in detail with reference to FIGS. 7 and 8.

FIGS. 7 and 8 are operation state views illustrating an operation state of the far-side airbag device of the vehicle according to the first embodiment of the disclosure, respectively.

When a side collision of the vehicle occurs, the inflater 30 generates a gas by igniting the internal firer according to a detection signal of the impact detection sensor (not shown) installed in the vehicle, and supplies the gas generated in the inflater 30 to the inside of the airbag cushion 20.

When the gas is supplied from the inflater 30, the airbag cushion 20 may be ejected to the outside of the backrest 12 of the seat 11, and may be inflated and deployed in the forward, upward, and backward directions from the side of the occupant.

In this case, the airbag cushion 20 may be inflated and deployed while having the deployment shape restricted by the restriction member 40 installed therein, as shown in FIGS. 7 and 8.

That is, as shown in FIG. 7, the airbag cushion 20 is deployed in such a shape that the center of the airbag cushion 20 is bent upward by the first tether 41 to almost come into contact with the side of the occupant in an initial deployment process.

Consecutively, in the process of inflating and deploying the airbag cushion 20, the airbag cushion 20 is deployed in such a shape that the upper chamber 23 is bent toward the front sides of the upper portion of the chest, the neck, the head of the occupant by the second tether 42, as shown in FIG. 8.

Accordingly, the airbag cushion 20 may be finally inflated and deployed in the upward direction to almost come into contact with the side of the occupant, as shown in FIG. 2.

As described above, the disclosure may safely protect the occupant by inflating and deploying the airbag cushion in the upward direction almost in contact with the side of the occupant.

In addition, the disclosure may safely protect occupant's head by controlling the deployment shape to allow the upper chamber of the airbag cushion to face the upper portion of the upper body of the occupant, particularly, the front of the head.

In the present embodiment, it is illustrated that the restriction member 40 provided inside the airbag cushion 20, that is, the first and second tethers 41, 42, are installed to control the deployment shape of the airbag cushion 20, but the disclosure may have a restriction member 40 additionally installed outside the airbag cushion 20 to more effectively control the deployment shape of the airbag cushion 20.

That is, as shown in FIGS. 7 and 8, a third tether 47 may be installed between a front end of the airbag cushion 20 and the backrest 12 of the seat 11 to control the deployment shape to inflate and deploy the airbag cushion 20 almost in contact with the side of the occupant.

For example, one end of the third tether 47 may be connected to the front end of the airbag cushion 20 on a higher position than a front end of the first tether 41, and the other end of the third tether 47 may be connected to an internal frame (not shown) of the backrest 12.

Alternatively, one end of the third tether 47 may be connected to a front end of the upper chamber 23 of the airbag cushion 20, and the other end of the third tether 47 may be connected to the frame.

One or more third tethers 47 may be provided according to various conditions such as standards and a deployment shape of the airbag cushion 20 to be controlled, and positions where the third tethers 47 are connected to the airbag cushion 20 and the frame may be variously changed.

As described above, the disclosure may have the additional tether installed between the airbag cushion and the backrest of the seat to more effectively control the deployment shape of the airbag cushion.

That is, the disclosure may prevent a collision with another occupant by controlling the deployment shape of the airbag cushion by using the third tether additionally installed, and simultaneously, preventing lateral movement of the occupant by supporting the occupant.

In addition, the disclosure may have the third tether connected to the upper chamber of the airbag cushion, and may more safely protect the front sides of the upper body and the head along with the side of the occupant, by bending the upper chamber toward the front side of the occupant.

### [Second Embodiment]

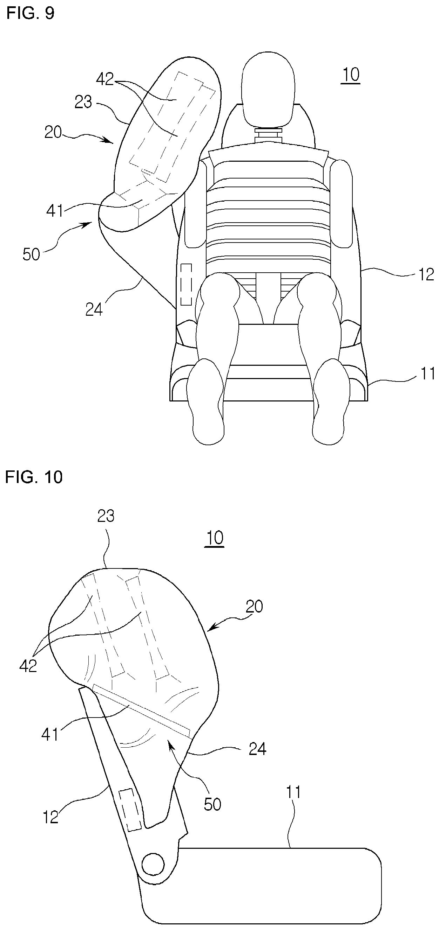

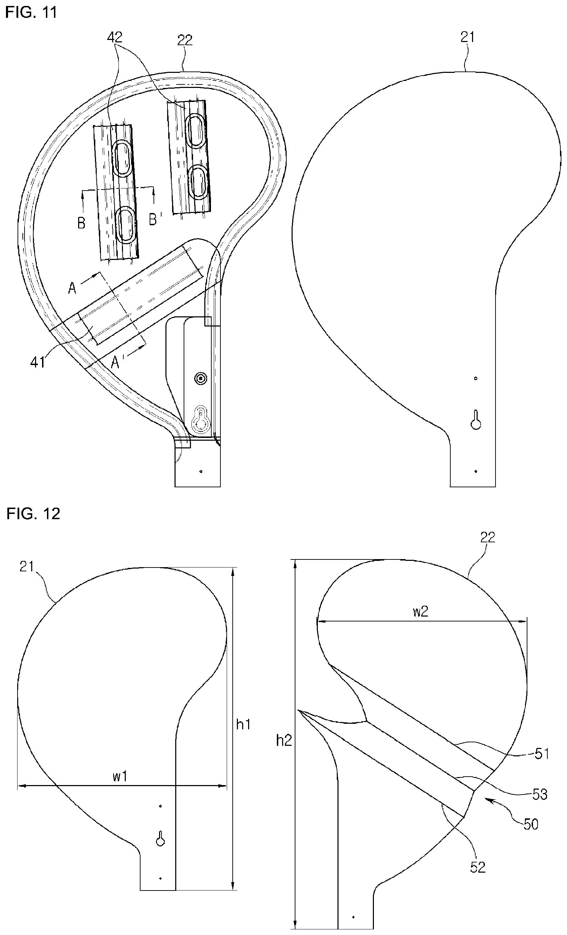

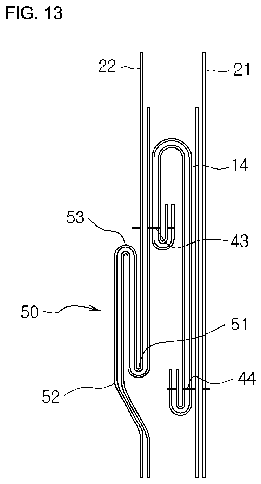

FIGS. 9 and 10 are a front view and a side view illustrating a state in which an airbag cushion in a far-side airbag device of a vehicle is deployed according to a second embodiment of the disclosure, respectively, FIG. 11 is a side view illustrating a state in which a restriction member is installed on an inner surface of an outside panel shown in FIG. 9, FIG. 12 is a deployment view of an inside panel and the outside panel shown in FIG. 11, and FIG. 13 is a cross-sectional view taken on line A-A' of FIG. 11.

As shown in FIGS. 9 to 12, the far-side airbag device 10 of the vehicle according to the second embodiment of the disclosure may have the same configuration as the configuration of the far-side airbag device 10 described in the first embodiment, but the outside panel 22 of the airbag cushion 20 may have a larger cross-sectional area than the inside panel 21.

That is, a height h2 of the outside panel 22 may be higher than a height h1 of the inside panel 21. Of course, a width w2 of the outside panel 22 may be wider than a width w1 of the inside panel 21.

In addition, a folding portion 50 may be provided on the outside panel 22 to have parts overlapping each other.

For example, as shown in FIGS. 11 to 13, the folding portion 50 may have parts overlapping each other with a pre-set width on a center of the outside panel 22, and may be folded toward the upper chamber 23 or lower chamber 24 on the outside panel 22 to have parts overlapping each other.

That is, as shown in FIG. 12, the folding portion 50 may be formed on the center of the outside panel 22 horizontally or to be inclined toward an upper portion of a rear side.

A first folding line 51 may be formed on an upper end of the folding portion 50 to be folded with a portion of the outside panel 22 corresponding to the upper chamber 23, and a second folding line 52 may be formed on a lower end of the folding portion 50 to be folded with a portion of the outside panel 22 corresponding to the lower chamber 24.

In addition, a third folding line 53 may be formed on the center of the folding portion 50 to divide the portion folded by the first folding line 51 and the second folding line 52 into two parts and to overlap the two parts each other.

Herein, one end of the first tether 41, an upper end when viewed on FIG. 13, is connected with the outside panel 22 by the first sewing line 43 formed on a higher position than the first folding line 51.

Accordingly, when a gas is supplied to inflate and deploy the airbag cushion 20, the folding portion 50 may be inflated and deployed to protrude toward the opposite occupant from the center of the outside panel 22.

In this case, since the inside panel 21 and the outside panel 22 of the airbag cushion 20 are sewed along edges, the airbag cushion 20 is inflated and deployed while being bent toward the occupant due to the inflation and deployment of the folding portion 50.

That is, the upper chamber 23 of the airbag cushion 20 is inflated and deployed to be bent toward the occupant's head with reference to the center of the airbag cushion 20 by the folding portion 50 and the first tether 41 as shown in FIG. 9.

A described above, the disclosure has the outside panel of the airbag cushion formed to have a larger cross-sectional area than the inside panel, and has the folding portion formed on the center of the outside panel to have parts overlapping each other, so that a deployment shape of the upper chamber of the airbag cushion may be controlled.

Accordingly, the disclosure controls the deployment shape of the airbag cushion to almost come into contact with the side of the occupant, so that a space may be prevented from being formed between the occupant and the airbag cushion, and lateral movement of the occupant may be prevented and the occupant may be safely protected.

Although the invention made by the inventors of the present application has been specifically described according to the above embodiments, the present disclosure is not limited to the above embodiments, and may be modified variously within a scope of the technical essence of the disclosure.

### INDUSTRIAL APPLICABILITY

The disclosure is applied to a far-side airbag device technology of a vehicle, which safely protects an occupant by controlling a deployment shape of an airbag cushion of the far-side airbag device to almost come into contact with the side of an occupant, and preventing a space from being formed between the occupant and the airbag cushion, and preventing lateral movement of the occupant.

## Claims

1. A far-side airbag cushion of a vehicle comprising:
an airbag cushion (20) which is embedded in a backrest (12) of a seat (11) and is inflated and deployed to correspond to a side of an upper body of an occupant upon side collision of the vehicle;
an inflater (30) configured to generate a gas by an impact detection signal and to supply the gas to the airbag cushion (20) upon side collision of the vehicle; and
a restriction member (40) which is installed in the airbag cushion (20) and configured to restrict a deployment shape of the airbag cushion (20),
wherein the airbag cushion (20) is inflated and deployed in an upward direction from a side of the occupant due to the restriction member (40) to prevent a lateral movement of the occupant,
wherein the airbag cushion (20) comprises an upper chamber (23) configured to protect an upper portion of chest, a neck, and a head with reference to the chest of the occupant, and
a lower chamber (24) configured to protect a lower portion of the chest, a belly, and a pelvis of the occupant,
wherein the restriction member (40) comprises a first tether (41) installed on a center of the airbag cushion (20) to restrict the deployment shape to allow the upper chamber (23) to face the occupant or to face in the upward direction with reference to the center of the airbag cushion (20),
wherein the airbag cushion (20) is formed in a bag-like shape by sewing edges of an inside panel (21) to come into contact with the occupant and an outside panel (22) to come into contact with the opposite occupant, and
wherein the first tether (41) is installed between a front end and a rear end of the center of the airbag cushion (20) to be inclined toward an upper portion of a rear side,
wherein one end of the first tether (41) is connected to the outside panel (22),
wherein the other end of the first tether (41) is connected to the inside panel (21),
**characterized in that** the one end of the first tether (41) is disposed on a higher position to the outside panel (22) than the other end of the first tether (41) to the inside panel (21), such that the upper chamber (23) is bent toward the occupant or in the upward direction.

2. The far-side airbag device of claim 1,
wherein the one end of the first tether (41) is connected to the outside panel (22) by a first sewing line (43),
wherein the other end of the first tether (41) is connected to the inside panel (21) by a second sewing line (44), and
wherein the first sewing line (43) is disposed on a higher position than a height of the second sewing line (44), such that the upper chamber (23) is bent toward the occupant or in the upward direction.

3. The far-side airbag device of claim 1 or 2,
wherein the restriction member (40) further comprises a second tether (42) installed in the upper chamber (23) of the airbag cushion (20) along a vertical direction to restrict a deployment shape of the upper chamber (23),
wherein one end of the second tether (42) is connected to the outside panel (22) by a third sewing line (45),
wherein the other end of the second tether (42) is connected to the inside (21) panel by a fourth sewing line (46), and
wherein the third sewing line (45) is disposed further back than the fourth sewing line (46), such that the upper chamber (23) is bent toward a front side of the occupant.

4. The far-side airbag device of claim 1 or 2,
wherein the outside panel (22) of the airbag cushion (20) which comes into contact with a side of the opposite occupant is formed to have a larger cross-sectional area than the inside panel (21), such that the upper chamber (23) of the airbag cushion (20) is bent in the upward direction and toward a front side of the occupant.

5. The far-side airbag device of claim 4,
wherein a height (h2) of the outside panel (22) is higher than a height (h1) of the inside panel (21), and
wherein a width (w2) of the outside panel (22) is wider than a width (w1) of the inside panel (21).

6. The far-side airbag device of claim 1 or 2,
wherein the airbag cushion (20) comprises a folding portion (50) configured to fold parts of the outside panel (22) contacting the opposite occupant to overlap each other so as to allow the upper chamber (23) to be deployed in the upward direction, and
wherein the folding portion (50) is configured to control the deployment shape to allow the upper chamber (23) of the airbag cushion (20) to face in the upward direction while the airbag cushion (20) is inflated and deployed to protrude toward the opposite occupant.

7. The far-side airbag device of claim 6,
wherein the folding portion (50) has parts overlapping each other with a pre-set width on a center of the outside panel (22) of the airbag cushion (20) and is folded toward the upper chamber (23) or lower chamber (44) on the outside panel (22) to have parts overlapping each other.

8. The far-side airbag device of claim 7,
wherein a first folding line (51) is formed on an upper end of the folding portion (50) to be folded with a portion of the outside panel (22) corresponding to the upper chamber (23),
wherein a second folding (52) line is formed on a lower end of the folding portion (50) to be folded with a portion of the outside panel (22) corresponding to the lower chamber (24), and
wherein a third folding line (53) is formed on a center of the folding portion (50) to divide a portion folded by the first folding line (51) and the second folding line (22) into parts overlapping each other.

9. The far-side airbag device of claim 6,
wherein an upper end of the first tether (41) is connected with an outside panel (22) of the airbag cushion (20) by the first sewing line (43) formed on a higher position than the folding portion (50).

10. The far-side airbag device of claim 1 or 2,
wherein the restriction member (40) further comprises one or more third tethers (47) installed between the airbag cushion (20) and the backrest (12) to control the deployment shape of the airbag cushion (20).

## Patentansprüche

1. Far-Side-Airbagkissen eines Fahrzeugs, umfassend:
ein Airbagkissen (20), das in einer Rückenlehne (12) eines Sitzes (11) eingebettet ist und bei einer Seitenkollision des Fahrzeugs aufgeblasen und entfaltet wird, um einer Seite eines Oberkörpers eines Insassen zu entsprechen;
einen Gasgenerator (30), der konfiguriert ist, um durch ein Aufprallerkennungssignal ein Gas zu erzeugen und um bei der Seitenkollision des Fahrzeugs dem Airbagkissen (20) das Gas zuzuführen; und
ein Einschränkungselement (40), das in dem Airbagkissen (20) installiert und konfiguriert ist, um eine Entfaltungsform des Airbagkissens (20) einzuschränken,
wobei das Airbagkissen (20) aufgrund des Einschränkungselements (40) von einer Seite des Insassen aufgeblasen und in einer Aufwärtsrichtung entfaltet wird, um eine laterale Bewegung des Insassen zu verhindern,
wobei das Airbagkissen (20) eine obere Kammer (23) umfasst, die konfiguriert ist, um einen oberen Abschnitt einer Brust, einen Hals und einen Kopf in Bezug auf die Brust des Insassen zu schützen, und
eine untere Kammer (24), die konfiguriert ist, um einen unteren Abschnitt der Brust, einen Bauch und ein Becken des Insassen zu schützen,
wobei das Einschränkungselement (40) einen ersten Haltegurt (41) umfasst, der in einer Mitte des Airbagkissens (20) installiert ist, um die Entfaltungsform einzuschränken, um der oberen Kammer (23) zu ermöglichen, zu dem Insassen zu zeigen oder in Bezug auf die Mitte des Airbagkissens (20) in die Aufwärtsrichtung zu zeigen,
wobei das Airbagkissen (20) durch ein Vernähen von Rändern einer Innenbahn (21), die mit dem Insassen in Berührung kommt, und einer Außenbahn (22), die mit dem gegenüberliegenden Insassen in Berührung kommt, zu einer taschenartigen Form ausgebildet wird und
wobei der erste Haltegurt (41) zwischen einem vorderen Ende und einem hinteren Ende der Mitte des Airbagkissens (20) installiert ist, um zu einem oberen Abschnitt einer hinteren Seite hin geneigt zu sein,
wobei ein Ende des ersten Haltegurts (41) mit der Außenbahn (22) verbunden ist,
wobei das andere Ende des ersten Haltegurts (41) mit der Innenbahn (21) verbunden ist,
**dadurch gekennzeichnet, dass** das eine Ende des ersten Haltegurts (41) an einer höheren Position zu der Außenbahn (22) als das andere Ende des ersten Haltegurts (41) zu der Innenbahn (21) eingerichtet ist, sodass die obere Kammer (23) zu dem Insassen hin oder in die Aufwärtsrichtung gebogen ist.

2. Far-Side-Airbagvorrichtung nach Anspruch 1,
wobei das eine Ende des ersten Haltegurts (41) durch eine erste Nählinie (43) mit der Außenbahn (22) verbunden ist,
wobei das andere Ende des ersten Haltegurts (41) durch eine zweite Nählinie (44) mit der Innenbahn (21) verbunden ist und
wobei die erste Nählinie (43) an einer höheren Position als eine Höhe der zweiten Nählinie (44) eingerichtet ist, sodass die obere Kammer (23) zu dem Insassen hin oder in die Aufwärtsrichtung gebogen ist.

3. Far-Side-Airbagvorrichtung nach Anspruch 1 oder 2,
wobei das Einschränkungselement (40) ferner einen zweiten Haltegurt (42) umfasst, der entlang einer vertikalen Richtung in der oberen Kammer (23) des Airbagkissens (20) installiert ist, um eine Entfaltungsform der oberen Kammer (23) einzuschränken,
wobei ein Ende des zweiten Haltegurts (42) durch eine dritte Nählinie (45) mit der Außenbahn (22) verbunden ist,
wobei das andere Ende des zweiten Haltegurts (42) durch eine vierte Nählinie (46) mit der Innenbahn (21) verbunden ist und
wobei die dritte Nählinie (45) weiter rückwärtig als die vierte Nählinie (46) eingerichtet ist, sodass die obere Kammer (23) zu einer Vorderseite des Insassen hin gebogen ist.

4. Far-Side-Airbagvorrichtung nach Anspruch 1 oder 2,
wobei die Außenbahn (22) des Airbagkissens (20), die mit einer Seite des gegenüberliegenden Insassen in Berührung kommt, ausgebildet ist, um eine größere Querschnittsfläche als die Innenbahn (21) aufzuweisen, sodass die obere Kammer (23) des Airbagkissens (20) in die Aufwärtsrichtung und zu einer Vorderseite des Insassen hin gebogen ist.

5. Far-Side-Airbagvorrichtung nach Anspruch 4,
wobei eine Höhe (h2) der Außenbahn (22) höher als eine Höhe (h1) der Innenbahn (21) ist und
wobei eine Breite (w2) der Außenbahn (22) breiter als eine Breite (w1) der Innenbahn (21) ist.

6. Far-Side-Airbagvorrichtung nach Anspruch 1 oder 2,
wobei das Airbagkissen (20) einen Faltabschnitt (50) umfasst, der konfiguriert ist, um Teile der Außenbahn (22), die den gegenüberliegenden Insassen berühren, zu falten, um einander zu überlappen, um der oberen Kammer (23) zu ermöglichen, in der Aufwärtsrichtung entfaltet zu werden, und
wobei der Faltabschnitt (50) konfiguriert ist, um die Entfaltungsform zu steuern, um der oberen Kammer (23) des Airbagkissens (20) zu ermöglichen, in die Aufwärtsrichtung zu zeigen, während das Airbagkissen (20) aufgeblasen und entfaltet wird, um zu dem gegenüberliegenden Insassen hin vorzustehen.

7. Far-Side-Airbagvorrichtung nach Anspruch 6,
wobei der Faltabschnitt (50) Teile aufweist, die einander mit einer voreingestellten Breite in einer Mitte der Außenbahn (22) des Airbagkissens (20) überlappen, und zu der oberen Kammer (23) oder der unteren Kammer (44) hin auf der Außenbahn (22) gefaltet ist, um zu veranlassen, dass Teile einander überlappen.

8. Far-Side-Airbagvorrichtung nach Anspruch 7,
wobei eine erste Faltlinie (51) an einem oberen Ende des Faltabschnitts (50) ausgebildet ist, um mit einem Abschnitt der Außenbahn (22), der der oberen Kammer (23) entspricht, gefaltet zu werden,
wobei eine zweite Faltlinie (52) an einem unteren Ende des Faltabschnitts (50) ausgebildet ist, um mit einem Abschnitt der Außenbahn (22), der der unteren Kammer (24) entspricht, gefaltet zu werden, und
wobei eine dritte Faltlinie (53) in einer Mitte des Faltabschnitts (50) ausgebildet ist, um einen Abschnitt, der durch die erste Faltlinie (51) und die zweite Faltlinie (22) gefaltet ist, in Teile, die einander überlappen, aufzuteilen.

9. Far-Side-Airbagvorrichtung nach Anspruch 6,
wobei ein oberes Ende des ersten Haltegurts (41) mit einer Außenbahn (22) des Airbagkissens (20) durch die erste Nählinie (43), die an einer höheren Position als der Faltabschnitt (50) ausgebildet ist, verbunden ist.

10. Far-Side-Airbagvorrichtung nach Anspruch 1 oder 2,
wobei das Einschränkungselement (40) ferner einen oder mehrere dritte Haltegurte (47) umfasst, die zwischen dem Airbagkissen (20) und der Rückenlehne (12) installiert sind, um die Entfaltungsform des Airbagkissens (20) zu steuern.

## Revendications

1. Sac de coussin de sécurité gonflable de côté éloigné d'un véhicule comprenant :
un sac de coussin de sécurité gonflable (20) qui est intégré dans un dossier (12) d'un siège (11) et est gonflé et déployé pour correspondre à un côté d'un buste d'un occupant lors d'une collision latérale du véhicule ;
un gonfleur (30) conçu pour générer un gaz par un signal de détection d'impact et pour alimenter le gaz au sac de coussin de sécurité gonflable (20) lors d'une collision latérale du véhicule ; et
un élément de restriction (40) qui est installé dans le sac de coussin de sécurité gonflable (20) et conçu pour restreindre une forme de déploiement du sac de coussin de sécurité gonflable (20),
dans lequel le sac de coussin de sécurité gonflable (20) est gonflé et déployé dans une direction vers le haut à partir d'un côté de l'occupant en raison de l'élément de restriction (40) pour empêcher un mouvement latéral de l'occupant,
dans lequel le sac de coussin de sécurité gonflable (20) comprend une chambre supérieure (23) conçue pour protéger une portion supérieure de poitrine, un cou et une tête par rapport à la poitrine de l'occupant, et
une chambre inférieure (24) conçue pour protéger une portion inférieure de la poitrine, un ventre et un bassin de l'occupant,
dans lequel l'élément de restriction (40) comprend un premier câble d'attache (41) installé sur un centre du sac de coussin de sécurité gonflable (20) pour restreindre la forme de déploiement pour permettre à la chambre supérieure (23) de faire face vers l'occupant ou de faire face dans la direction vers le haut par rapport au centre du sac de coussin de sécurité gonflable (20),
dans lequel le sac de coussin de sécurité gonflable (20) est formé en une forme de type sac en cousant des bords d'un panneau intérieur (21) pour venir en contact avec l'occupant et d'un panneau extérieur (22) pour venir en contact avec l'occupant opposé, et
dans lequel le premier câble d'attache (41) est installé entre une extrémité avant et une extrémité arrière du centre du sac de coussin de sécurité gonflable (20) pour être incliné en direction d'une portion supérieure d'un côté arrière,
dans lequel une extrémité du premier câble d'attache (41) est reliée au panneau extérieur (22),
dans lequel l'autre extrémité du premier câble d'attache (41) est reliée au panneau intérieur (21),
**caractérisé en ce que** l'extrémité précitée du premier câble d'attache (41) est disposée sur une position plus haute sur le panneau extérieur (22) que l'autre extrémité du câble d'attache (41) sur le panneau intérieur (21), de telle sorte que la chambre supérieure (23) est pliée en direction de l'occupant ou dans la direction vers le haut.

2. Dispositif de coussin de sécurité gonflable de côté éloigné selon la revendication 1,
dans lequel l'extrémité précitée du premier câble d'attache (41) est reliée au panneau extérieur (22) par une première ligne de couture (43),
dans lequel l'autre extrémité du premier câble d'attache (41) est reliée au panneau intérieur (21) par une deuxième ligne de couture (44), et
dans lequel la première ligne de couture (43) est disposée sur une position plus haute qu'une hauteur de la deuxième ligne de couture (44), de telle sorte que la chambre supérieure (23) est pliée en direction de l'occupant ou dans la direction vers le haut.

3. Dispositif de coussin de sécurité gonflable de côté éloigné selon la revendication 1 ou 2,
dans lequel l'élément de restriction (40) comprend en outre un deuxième câble d'attache (42) installé dans la chambre supérieure (23) du sac de coussin de sécurité gonflable (20) le long d'une direction verticale pour restreindre une forme de déploiement de la chambre supérieure (23),
dans lequel une extrémité du deuxième câble d'attache (42) est reliée au panneau extérieur (22) par une troisième ligne de couture (45),
dans lequel l'autre extrémité du deuxième câble d'attache (42) est reliée au panneau intérieur (21) par une quatrième ligne de couture (46), et
dans lequel la troisième ligne de couture (45) est disposée plus à l'arrière que la quatrième ligne de couture (46), de telle sorte que la chambre supérieure (23) est pliée en direction d'un côté avant de l'occupant.

4. Dispositif de coussin de sécurité gonflable de côté éloigné selon la revendication 1 ou 2,
dans lequel le panneau extérieur (22) du sac de coussin de sécurité gonflable (20) qui vient en contact avec un côté de l'occupant opposé est formé pour avoir une plus grande aire en coupe transversale que le panneau intérieur (21), de telle sorte que la chambre supérieure (23) du sac de coussin de sécurité gonflable (20) est pliée dans la direction vers le haut et en direction d'un côté avant de l'occupant.

5. Dispositif de coussin de sécurité gonflable de côté éloigné selon la revendication 4,
dans lequel une hauteur (h2) du panneau extérieur (22) est plus haute qu'une hauteur (h1) du panneau intérieur (21), et
dans lequel une largeur (w2) du panneau extérieur (22) est plus large qu'une largeur (w1) du panneau intérieur (21).

6. Dispositif de coussin de sécurité gonflable de côté éloigné selon la revendication 1 ou 2,
dans lequel le sac de coussin de sécurité gonflable (20) comprend une portion de pliage (50) conçue pour plier des parties du panneau extérieur (22) venant en contact avec l'occupant opposé pour qu'elles se chevauchent mutuellement de façon à permettre à la chambre supérieure (23) d'être déployée dans la direction vers le haut, et
dans lequel la portion de pliage (50) est conçue pour commander la forme de déploiement pour permettre à la chambre supérieure (23) du sac de coussin de sécurité gonflable (20) de faire face dans la direction vers le haut alors que le sac de coussin de sécurité gonflable (20) est gonflé et déployé pour faire saillie en direction de l'occupant opposé.

7. Dispositif de coussin de sécurité gonflable de côté éloigné selon la revendication 6,
dans lequel la portion de pliage (50) a des parties se chevauchant mutuellement avec une largeur préétablie sur un centre du panneau extérieur (22) du sac de coussin de sécurité gonflable (20) et est pliée en direction de la chambre supérieure (23) ou de la chambre inférieure (44) sur le panneau extérieur (22) pour avoir des parties se chevauchant mutuellement.

8. Dispositif de coussin de sécurité gonflable de côté éloigné selon la revendication 7,
dans lequel une première ligne de pliage (51) est formée sur une extrémité supérieure de la portion de pliage (50) pour être pliée avec une portion du panneau extérieur (22) correspondant à la chambre supérieure (23),
dans lequel une deuxième ligne de pliage (52) est formée sur une extrémité inférieure de la portion de pliage (50) pour être pliée avec une portion du panneau extérieur (22) correspondant à la chambre inférieure (24), et
dans lequel une troisième ligne de pliage (53) est formée sur un centre de la portion de pliage (50) pour diviser une portion pliée par la première ligne de pliage (51) et la deuxième ligne de pliage (22) en parties se chevauchant mutuellement.

9. Dispositif de coussin de sécurité gonflable de côté éloigné selon la revendication 6,
dans lequel une extrémité supérieure du premier câble d'attache (41) est reliée à un panneau extérieur (22) du sac de coussin de sécurité gonflable (20) par la première ligne de couture (43) formée sur une position plus haute que la portion de pliage (50).

10. Dispositif de coussin de sécurité gonflable de côté éloigné selon la revendication 1 ou 2,
dans lequel l'élément de restriction (40) comprend en outre un ou plusieurs troisièmes câbles d'attache (47) installés entre le sac de coussin de sécurité gonflable (20) et le dossier (12) pour commander la forme de déploiement du sac de coussin de sécurité gonflable (20).
